# EUROPEAN PATENT APPLICATION

(11) **EP 2 388 683 A1**
(43) Date of publication of application: **23.11.2011**
(21) Application number: 10163304.8
(22) Date of filing: 19.05.2010
(51) Int. Cl.: G06F 3/048, G05B 19/418

(54) **Simplified navigation among process control views in a process control system**

(71) Applicant: ABB Technology AG, 8050 Zürich (CH)
(72) Inventor: Vetter, Claus, 5033, Buchs (CH)
(74) Representative: ABB Patent Attorneys

(57) **Abstract**

The present invention relates to a method for simplifying for a user to navigate among process control views on a user terminal display of a process control system as well as to a user terminal and a computer program product for simplifying such navigation. The method includes the steps presenting (38) a current main process control view in a first main view window together with a number of additional views in a second additional views window, receiving (40), from the user, a selection of a view in the second window to be main process control view, setting (42) the selected view as current main process control view, choosing (48) a group of views to be presented as additional views in the second window based on an additional view selection criterion and repeating presenting (38) current main process control view according to the received selection with the chosen group of views as additional views in the second window.

## Description

### FIELD OF THE INVENTION

The present invention generally relates to user terminals in process control systems. More particularly the present invention relates to a method for simplifying for a first user to navigate among process control views on a user terminal display of a process control system as well as to a user terminal and a computer program product for simplifying for a first user to navigate among such process control views.

### BACKGROUND

Operators have the need to view information relating to a technical process being controlled in a process control system. The technical process may be a process such as the process of electrical power transmission. Information can be sent from process interface units to the process control system, where the process control system visualizes the process control information in different process control views that can be seen in different windows.

When an operator is presented with information in one such view he or she may need to find additional information in one or more other views. The operator or user may then need to search for such further information in several "pages" or views of the process control system. These views are typically organized in some kind of menu system. An operator or user will then need to navigate through the menu system in order to obtain the different views and then perform some kind of activity like a control action.

This navigation in the menu system can be tedious, time consuming and even at times complicated. Another problem with view navigation is that the act of navigating will take away the focus of the user from what is essential, namely viewing the process and acting on events in the process, and instead concentrate on the activity of locating the information that is needed for being involved in the control of the process. This may in the worst case cause the user to make bad decisions.

The present invention is directed towards improving on this situation.

### SUMMARY OF THE INVENTION

The invention is thus directed towards simplifying for a user to navigate among process control views in a process control system.

This object is according to a first aspect of the invention achieved through a method for simplifying for a first user to navigate among process control views on a user terminal display of a process control system, comprising the steps of:
presenting a current main process control view in a first main-view window together with a number of additional views in a second additional-views window, receiving, from the first user, a selection of one of the additional views in the additional-views window to be a main process control view,
setting the selected view as current main process control view,
choosing a group of views to be presented as additional views in the second additional-views window based on an additional view selection criterion, and repeating, or updating, the step of presenting a current main process control view in the first main-view window according to the received selection together with the chosen group of views as additional views in the second additional-views window.

This object is according to a second aspect of the invention achieved through a user terminal for simplifying for a first user to navigate among process control views in a process control system and including a display, a user input unit and a control unit, the control unit being configured to
present a current main process control view in a first main view window together with a number of additional views in a second additional views window,
receive, from the first user, a selection of an additional view in the additional views window to be a main process control view,
set the selected view as current main process control view,
choose a group of views to be presented as additional views in the second additional views window based on an additional view selection criterion, and
repeat presenting current main process control view in the first main view window according to the received selection with the chosen group of views as additional views in the second additional views window.

This object is according to a third aspect of the invention achieved through a computer program product on a data carrier comprising computer program code for simplifying for a first user to navigate among process control views on a user terminal display of a process control system, the computer program code being configured to cause a computer to, when the computer program code is loaded into the computer:
present a current main process control view in a first main view window together with a number of additional views in a second additional views window,
receive, from the first user, a selection of an additional view in the additional views window to be a main process control view,
set the selected view as current main process control view,
choose a group of views to be presented as additional views in the second additional views window based on an additional view selection criterion, and repeat presenting current main process control view according to the received selection in the first main view window with the chosen group of views as additional views in the second additional views window.

The invention simplifies the navigation for a user of a process control system among a number of process control views, which allows the user to concentrate on more urgent matters. Since the options are visually presented, the right selection is easier to make. The invention can furthermore be implemented at very small additional costs. It can be implemented using additional computer program code.

### BRIEF DESCRIPTION OF THE DRAWINGS

The present invention will in the following be described with reference being made to the accompanying drawings, where
Fig. 1 schematically shows a computerized process control system,
Fig. 2 schematically shows a user terminal of the present invention,
Fig. 3A shows a first process control view in the form of a a world view or general overview of the process control system,
Fig. 3B shows a second process control view in the form of a single-line diagram of a substation,
Fig. 3C shows a third process control view in the form of an alarm list,
Fig. 3D shows a fourth process control view in the form of a drawing of an element in a substation,
Fig. 3E shows a fifth process control view in the form of a parallel axis diagram of some measured data for a number of elements in a substation,
Fig. 4 schematically shows two windows on a user terminal display where process control views are presented,
Fig. 5A shows a first grouping of process control views presented to a first user,
Fig. 5B shows a second grouping of process control views being presented to the first user after a selection of one view in the first grouping,
Fig. 5C shows a third grouping of process control views being presented to the first user after a selection of one view in the second grouping,
Fig. 6 schematically shows a flow chart of a number of method steps being performed in a method according to the invention and
Fig. 7 schematically shows a data carrier comprising computer program code providing the functionality of the method according to the invention.

### DETAILED DESCRIPTION OF THE INVENTION

In the following, embodiments of the invention providing the above described functionality will be described.

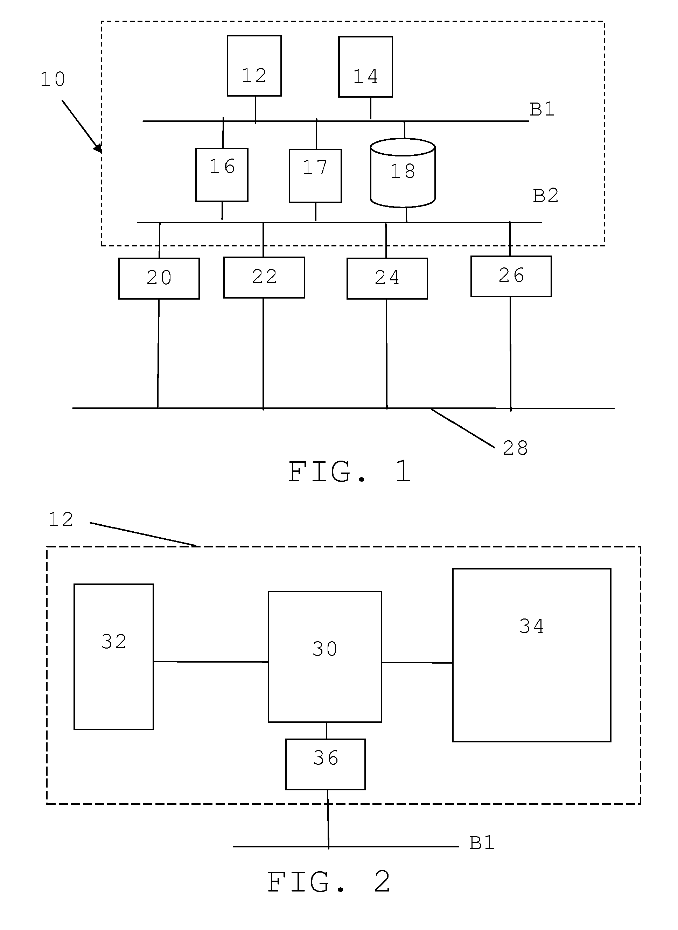

Fig. 1 schematically shows a computerized process control system 10. The process control system 10 may typically be an object based computerised system for controlling a technical process or perhaps part of a technical process. Typical technical processes are for example electrical power generation, transmission and/or distribution processes, water purification and/or distribution processes, oil and/or gas production and distribution processes, petrochemical, chemical, pharmaceutical and food processing processes, as well as pulp and paper production processes. These are just some examples of technical processes where the process control system 10 can be applied. There exist countless other. The technical process may be monitored and controlled by a user or user through a user terminal, which communicates with one or more servers handling monitoring and control of the process. One preferred field where the present invention is to be applied is a power transmission system.

In fig. 1 the process control system 10 therefore includes a number of operator and engineering terminals 12 and 14 connected to a first bus B1. Operator and engineering terminals are two different types of user terminals. There is furthermore a second bus B2 and between the first and second busses there are connected a first server 16 providing control of the process, a second server 17 providing monitoring of the process and a database 18 where data relating to control and possibly monitoring of the process is stored. Such data is here also called process control data. To the second bus there are furthermore connected process interface units for providing control and measurements in the system 10. The first server 16 is therefore a part of a control system, while the second server 17 is a part of a monitoring system. In the figure 1, there are provided four such process interface units 20, 22, 24 and 26 connected to a power line 28. It should here be realized that some of these may only be provided for control, some only for measurements and some for both control and measurements. Such process interface units are thus involved in controlling the electrical power transmission process or measuring properties of the controlled process as well as properties or status of control and measurement units. Process interface units can include elements directed towards measuring such as current, voltage and power measurement units like current transformers and voltage transformers, as well as elements directed towards control operations like circuit breakers, relays, power semiconductor switches and tap changers. A process interface unit can also be a higher level element like a generator. A process control device is therefore typically an entity like a substation, while a process control element is an entity in such a device, such as a transformer. These are just a few of several different possible types of elements that can be provided in process interface units.

The first server 16 here receives measurements of the process via the process interface units and controls the process via the process interface units based on these measurements. It also stores historical process control data in the data base 18. The second server 17 receives measurements via the process interface units as well as status data concerning the operation of process interface units and can generate alarm and event data that may be presented via the user terminals 12 and 14. It can also shut down the process. Also alarm and event data may be stored in the database 18.

In the example of figure 1, a so called Network Manager system runs on the process control system 10, which belongs to the group of SCADA (Supervisory Control And Data Acquisition) systems. The Network Manager system is particularly intended for the supervision and control of power transmission systems or gas systems.

A user terminal 12 and 14 in the process control system 10 provide each a user interface to the Network Manager system. In the following, the details of such a user terminal are explained based on the example of user terminal 12, shown in figure 2. The user terminal 12 includes a user input unit 32, a display 34, a control unit 30 and an interface 36 for communicating with the system 10 via the first bus B1. As mentioned above, the user terminal provides a graphical user interface for an operator or user of the process control system 10. The control unit 30 may be a processor with an associated program memory including program code for performing the functionality of the present invention, which will be described later on. The user input unit 32 is a unit through which a user of the user terminal 12 may enter data. As such it may be a keyboard, a keypad or a pointing device like a mouse. A combination of these may also be used. It may also be combined with the display 34 in order to form a touch screen. The user terminal 12 may also include other user interfaces such as a speaker or a microphone in order to present and receive data to and from one or more users of the user terminal in other ways than through the display and keyboard. A user terminal in a process control system is only one example of a computer in which the present invention may be realized.

Process control data values from the various process interface units can be collected and stored in the history data base 18 by the first server 16 as well as presented in real-time to a user via the user terminal display 34.

On the user terminals 12 and 14 it is possible to show a number of different process control views. A process control view may include an overview of the whole process control system, one or more different views of process control devices such as of a substation, alarm lists, views of process control elements like elements of a substation as well as a process control views of data associated with an element or device, such as statistical data. A number of different types of views may thus exist. This means that a lot of different process control views may exist, i.e. views of aspects of the process control system or the technical process.

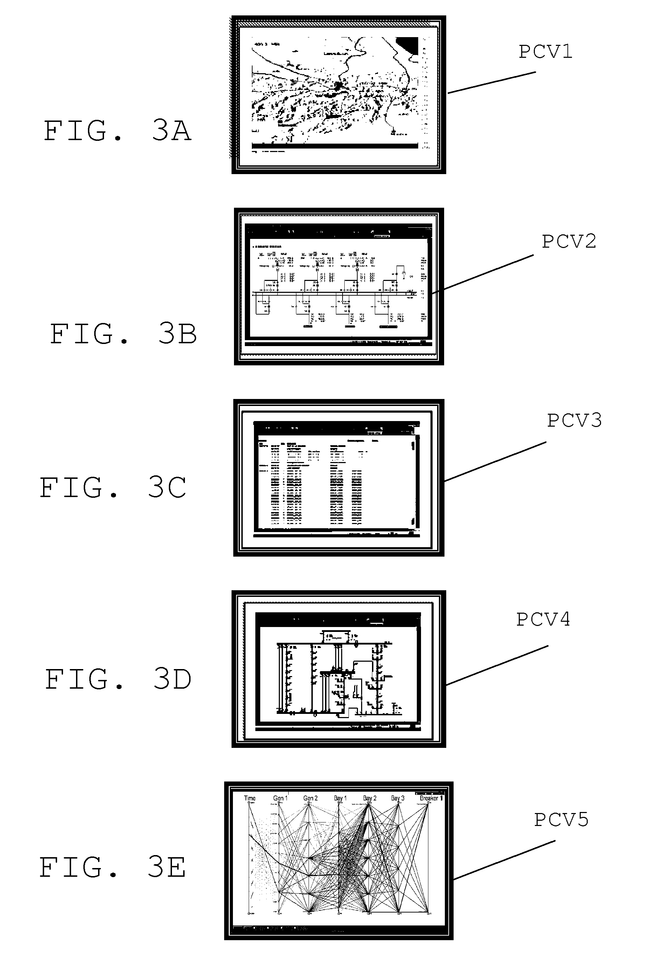

Fig. 3A here shows a first such process control view PCV1, which is a world view of the whole system. This world view is here provided in the form of a geographical map of the system where a number of process control devices in the form of substations are shown as interconnected by power lines. Fig. 3B shows a second process control view PCV2, which is a single line diagram of a substation in the system appearing in the first process control view PCV1. Fig. 3C shows a third process control view PCV3, which is an alarm list on which alarms associated with a process control device, here the substation in the second process control view PCV2, are shown. Fig. 3D shows a fourth process control view PCV4 in the form of a process control element in the substation of the second process control view PCV2. Fig.3E shows a fifth process control view PCV5 depicting statistical data of process control elements of a process control device, here the process control device depicted in the second process control view PCV2. The data is here shown in relation to time in a parallel axis graph.

It should here be realized that these are just some examples of views that may exist in the system. These views are here used for describing the principles of the present invention. The invention is in no way limited to these specific views or these specific types of views, but countless other process control views may exist.

According to the invention there are provided a number of process control view windows in which the process control views are displayed simultaneously on one or more of the displays of the process control system.

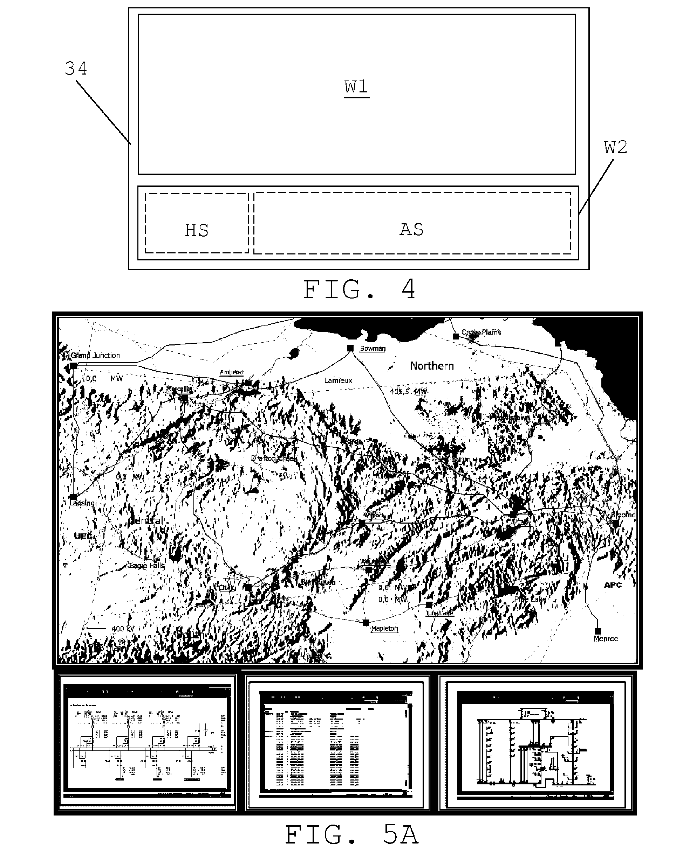

Fig. 4 schematically shows two such exemplifying windows on the display 34 of the user terminal. There is here a first main view window W1 and a second additional views window W2. The first main view window W1 occupies more than half of the display and in this example approximately two thirds of the display, while the second additional views window W2 in this example occupies approximately one third of the display. The second additional views window W2 is furthermore divided into a history section HS and an alternatives section AS. Here the alternatives section AS occupies most of the second additional views window W2 and in this example approximately two thirds of the window, while the history section HS occupies about one third of the second additional views window W2. In the second additional views window W2 it is then possible to display a number of views, while only one view is displayed in the first main view window. The above described sizes of windows and sections are mere examples and should not be taken as limiting figures. However, the first main view window W1 or rather the view displayed in it, is larger than all the additional views being displayed simultaneously in the second additional views window W2. It is preferably larger than all the additional views combined. The additional views can alternatively be thumbnail views. It should also be realized that the history section HS need not always be present in the additional views window W2, but only from time to time. In fact one embodiment of the invention does not use a history section at all.

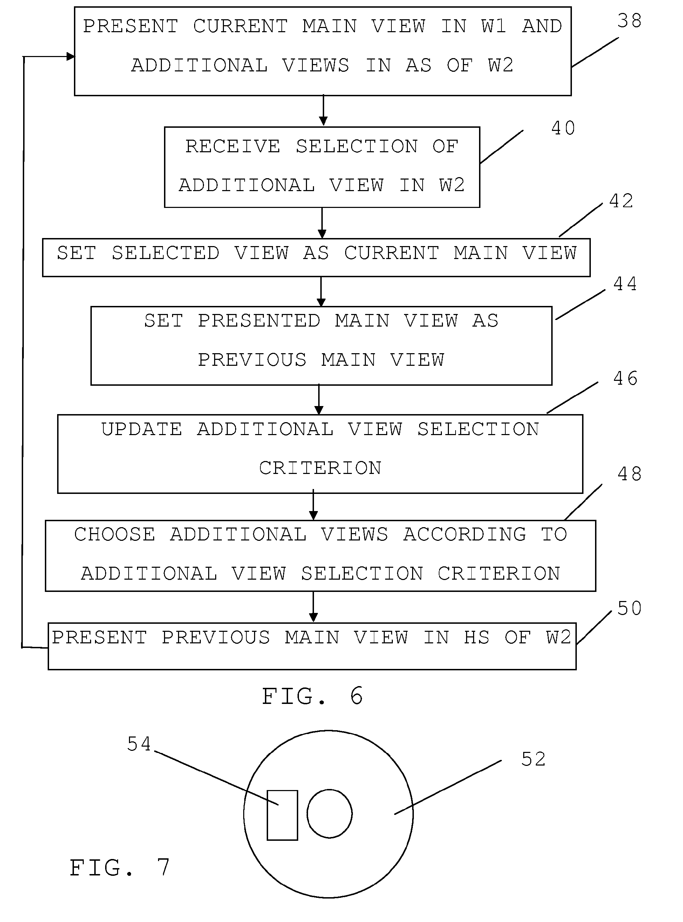

Now one embodiment of the invention will be described with reference being made to fig. 6, which shows a flow chart of a number of method steps being performed in a method according to the invention, and to fig. Fig. 5A-C, which show a number of groupings of proc ess control views presented in the first and second windows.

In the context of the exemplified electric power transmission process a user may be faced with an alarm being displayed in relation to a substation in a world map view, like the first process control view PCV1. This could be done through a symbol representing a substation blinking. The user may then need to open another view, such as a single line diagram view of the substation, like one in the second process control view PCV2, in order to analyze the status of the substation, from there navigate to an alarm and event list view, like the third process control view PCV3 and acknowledge the alarm, then navigate back to the substation view an run an application which results are again displayed in a separate view/picture. A user may therefore need to open several such windows or scenes.

This navigation is traditionally performed in a menu system, where the views are linked to each other in a hierarchical structure. The navigation can be tedious, time consuming and even at times complicated. Another problem with view navigation is that the act of navigating will take away the focus of the user from what is essential, namely viewing the technical process and concentrating and acting on events in the technical process, and instead focus on the activity of locating the information that is needed for being involved in the control of the process. This may in the worst case cause the user to make bad decisions.

The invention is provided for improving on this situation.

As the method according to a first embodiment of the invention is started one view is a current main view and in this case it is the first process control view PCV1, which is such a main view, which a user is observing on the display 34 of the user terminal 12. This means that the whole of the first main view window W1 is occupied by this first process control view PCV1. The alternatives section AS at this stage occupies the whole of the second alternatives window W2. In the alternatives section AS there are provided the second, third and fourth process control views PCV2, PCV3 and PCV4. This situation is shown in fig. 5A, which depicts a first grouping of views in the two windows. At this point there is no history section, which means that the second additional views window W2 is completely filled by the alternatives section. The reason for this is that the user, here also denoted a first user, has as yet not made any view selections. The second, third and fourth process control views are here alternative views, which the user may select for replacing the current main view. The views chosen for being presented in the alternatives section may here be predetermined for instance according to user preferences or based on statistical data either in relation to the first user and/or in relation also to other users. The views may have been chosen according to an additional view selection criterion, to be described later on.

It can here be mentioned that the first user may be able to select also other views to be main process control views through navigating through a traditional menu system. This may be possible in case the alternative views in the second window W2 are not views desirable for the first user.

There are a number of views that are possible to provide as alternatives in the second window W2, like for instance all views available in the system. This means that the views presented as alternatives views in the alternatives section AS of the second additional views window W2 have been selected by the control unit 30 of the work station 12 according to an additional view selection criterion. This criterion may have been set by the user, either before hand or when being logged on, i.e. on-line. The criterion may also consider system activities. System activities can be user activities by the first user, a group of users or all users. System activities may instead or additionally include alarms and events. This means that the selection criterion may consider the operational status of the system. The view selection criterion may thus be dynamically updated during a session or during the control of the technical process. In one variation of the invention the criterion uses a probability value assigned to an alternative view in relation to which view is the current main view, which probability value reflects the probability that the alternative view in question is selected as a next main view from the current main view. The current main view is thus presented in the first main view window W1 and additional views that may be selected by the first user are at the same time presented in the alternatives section AS of the second additional views window W2, step 38.

The first user may now decide to select to change main view, for instance because of an alarm being notified in relation to one of the substations presented in the overview of the system in the first main view window W1. The first user therefore selects one of the views in the second alternatives window W2. This may be done through clicking on one of the views presented in this latter window. Through this clicking, the control unit 30 of the work station 12 receives a selection of an additional view in the second alternatives window W2 to be a new main process control view, step 40, which selection is thus a selection of change of main view.

When the control unit 30 receives this selection, it first sets the newly selected main view to be a current main view, step 42, and thereafter sets the presented main view, in this example the first process control view PCV1, to be a previous main view, step 44. When this has been done, the control unit 30 updates the additional view selection criterion, step 46. This update may also be based on system activities like user activities and/or alarms and events. This update may also consider which view that was a current main view as the selection took place as well as which view that was selected to replace it as a main view. For the example of probability values, the control unit 30 may update the probability values of all the views based on the selection. Based on this data the control unit 30 updates the probability setting for the different views, i.e. it updates the additional view selection criterion in relation to the former or previous main view. The control unit thus updates the part of the additional view selection criterion that is concerned with or based on the previous main view.

At this stage the control unit may furthermore introduce the history section HS of the second alternatives window W2. This means that the number of views available for the alternatives section AS is reduced compared with the case when the history section did not exist.

After the received selection, the control unit 30 chooses a group of views to be presented as additional views according to the additional view selection criterion and in relation to the current main view, step 48. This may involve choosing the views having the highest probability values, i.e. the views being the most probable ones to be selected by the first user to follow as new main views after the current main view. The control unit 30 therefore applies a part of the selection criterion that concerns the current main view. When choosing views, the control unit 30 may also consider other factors, such as how much of the second additional views window W2 is to be occupied by the alternatives section AS as well as how much of this alternatives section an additional view may occupy, i.e. how much of the alternative section AS is available for different views. The control unit 30 then presents the previous main view in the history section HS of the second additional views window W2, step 50, and at the same time the current main view in the first main view window W1 and the chosen additional views in the alternatives section AS of the second additional views window W2, step 38.

As an example the first user here selected the second process control view PCV2, which is a single line diagram of a substation shown in the first process control view PCV1. This may have been done by the first user because an alarm was being indicated to have occurred in this substation on the overview of the system presented in the first process control view PCV1.

This means that the second process control view PCV2 is made into the current main view that is presented in the main window W1, while the first process control view PCV1 is a previous current view that is being presented in the history section HS of the additional views window W2. Additional views are then also chosen according to the selection criterion, which additional view in this example are the third and the fifth process control views PCV3 and PCV5, where the third process control view PCV3 is an alarm list and the fifth process control view PCV5 is a view of measured data over time, for instance of the elements of the substation in the second process control view.

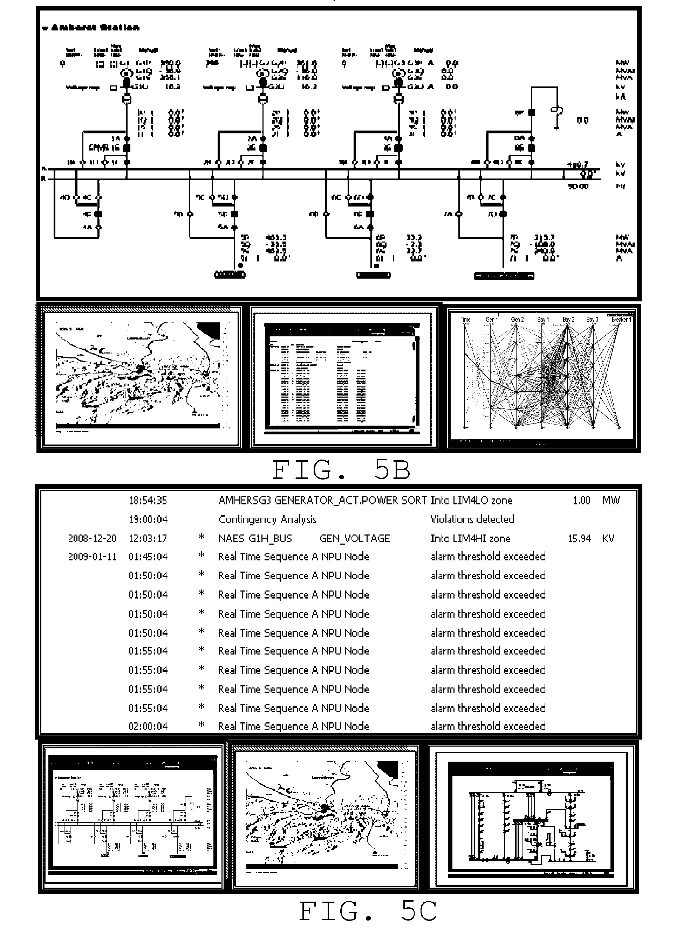

These views are then presented on the user terminal display, which presentation is shown in fig. 5B depicting a second grouping of views. The new user selected main view PCV2 is thus presented in the first main view window W1, while the previous main view is presented in the history section HS of the second alternatives window W2 and the alternative views chosen by the control unit 30 according to the selection criterion are presented in the alternatives section AS of the second additional views window W2. The first user can then select one of the views in the second additional views window W2. The first user can here select any of the views in this window W2, i.e. both in the history section HS and in the alternatives section AS. The selection is then received by the control unit 30, step 42, and causes the control unit 30 to change current and previous main views, step 42 and 44, update the additional view selection criterion, step 46, choose new additional views, step 48, and present the previous main view in the history section, step 50, together with the additional views in the alternatives section AS of the additional views window W2 and the new current main view in the first main view window W1, step 38.

As an example the user may have selected the third process control view PCV3 for viewing an alarm list in order to acknowledge an alarm, which causes the former main view, the second process control view PCV2, to be presented in the history section HS. The new additional views in the alternatives section AS may here be the first process control view PCV1 of the overview of the system and the fourth process control view PCV4, a view depicting an element in the substation, for instance an element in relation to which alarm was generated. This situation is schematically shown in fig. 5C, which depicts a third grouping of views.

In this way it is possible to continue to change views that can be selected based on selection criterion.

As mentioned above the selection criterion can be set according to probability values assigned to the various views. These values are in one variation of the invention set according to the selection pattern of the first user, i.e. set individually for users being logged onto the process control system. This may be done in the following way. For a specific process control view being a current main process control view, for instance the first process control view PCV1, all other views, i.e. all alternative views, are assigned a probability value p according to p = x/y, where x represents the number of times a particular alternative process control view is chosen when the specific process control view is a main process control view and y reflects the number of times this specific process control view is chosen as a main view. Initially both x and y may be set to one. As a particular process control view is selected to replace the specific main view, the value x of this particular view is incremented, while the values x of the other alternative process control views remain unchanged. At the same time the value y is incremented for all alternative process control views. This means that in the example of fig. 5A and 5B, the value x of the second process control view PCV2 to be selected when the first process control view PCV1 is the main process control view is incremented by one, while all other views, in the present example the third, fourth and fifth process control views PCV3, PCV4 and PCV5, retain their old value of x. The value of y is however incremented for all alternative views, i.e. for the second, third, fourth and fifth views PCV2, PCV3, PCV4 and PCV5. In this way the probabilities are changed according to the selections made by the first user.

The influences of selections on the change of the criterion can remain over several user sessions or only be valid for one session, a current session. Here it is possible that there are limitations on which views that can be selected from a main view. It may for instance only be possible to select views of elements of a device, when a view of this device is depicted in the main view. Elements of other devices may then not be possible to select. It may likewise be possible to select a view depicting a process control device from a main view depicting an element of this device but not views of other process control devices. It is also possible to set probabilities based on the selections made by a group or even all users of the system. It is thus possible to let statistics influence the updating of the criterion. This statistical influence is typically not restricted to any particular user session.

It is also possible to omit views from the alternatives section if they are already present in the history section. This means that a view having a high enough probability to be chosen in the group of alternative views will not be chosen since it is already present in the history section. The selection criterion can also be set by the first user, either pre-set before logging onto the system or on-line as the user is logged on. He or she may thus customize the presentation of alternative views to his or her own liking. This can be made for each view in the system or just some views, like for instance views associated with a certain process control device, like a certain substation. The selection criterion can also be set according to use case scenarios, i.e. according to views that may be of interest in various system states. These scenarios can be possible to configure by the users.

In the example given above the history section included only one view. It should be realized that it is possible that it includes more than one view. The presenting of views in the history section may also be limited. This limitation can be a limitation of numbers, for instance restricting the presentation to the three most recent main views. There may instead or additionally be a time limitation. Views may be removed from the history section based on how long ago they were main views. In this way it is possible to have a history section of varying size and the size of the alternatives section may be adaptively changed based on the size of the history section. The size of the history section can also be set by the user and also be completely omitted. With the history section it is also possible to step backwards through historical main view selections. If a view in the history section is selected, then the history section may be changed to look the same as when the main view in question previously was main view. In this way it is possible to replay previous user selections.

As mentioned above, it is possible to consider alarms and events when selecting additional views. Alarms and event may here also influence the updating of the criterion. The updating may involve making the criterion only consider alarm and event data or a combination of alarm and event data and user selections. The generation of an alarm or an event may for instance change the additional view selection criterion so that only views having a relation to the alarm are presented in the alternatives section. It is for instance possible that the criterion is changed, perhaps temporarily, until the alarm has been acknowledged or the cause of the alarm removed, so that views including a process control device for which the alarm is generated or views including process control elements for which the alarm was generated receive priority. Other views that may receive priority are views of data of these elements and this device and views including data about the alarm or event itself. This may be handled through the control unit of the user terminal receiving a notification of the alarm from the second server and adjusting, perhaps temporarily, the probability values, for instance raising the probability values of the above mentioned type of views related to the alarm. This will ensure that these views will be provided as alternatives in the alternatives section. After the alarm or event has been handled by the user, the previous probability values existing before the alarm or event may be retrieved without having the raised probabilities affect the criterion. As an alternative it is possible that the selections during the alarm phase are treated as all other selections in the updating of the criterion.

The user terminal may, as was previously described, preferably be provided in the form of one or more processors together with computer program memory including computer program code for performing the present invention. This computer program code may also be provided on one or more data carriers which performs the functionality of the present invention when the program code thereon is being loaded in a user terminal.

The invention may therefore also be provided as a computer program product loadable into a computer of the process control system, comprising computer program code causing the computer to carry out the method according to the invention. This computer program product may be provided as the actual program. Alternatively it may also be provided as a data carrier or a computer readable storage medium carrying such computer program code for causing a computer of the process control system to carry out the method of the invention. Such a data carrier in the form of a CD ROM disk 52 carrying such a computer program code 54 is schematically shown in fig. 7.

## Claims

1. Method for simplifying for a first user to navigate among process control views (PCV1, PCV2, PCV3, PCV4, PCV5) on a user terminal display (34) of a process control system (10), comprising the steps of:
- presenting (38) a current main process control view in a first main view window (W1) together with a number of additional views in a second additional views window (W2),
- receiving (40), from the first user, a selection of an additional view in the additional views window to be a main process control view,
- setting (42) the selected view as current main process control view,
- choosing (48) a group of views to be presented as additional views in the second additional views window based on an additional view selection criterion, and
- repeating the step of presenting (38) current main process control view according to the received selection in the first main view window with the chosen group of views as additional views in the second additional views window.

2. Method according to claim 1, wherein the additional view selection criterion considers system activities.

3. Method according to claim 1 or 2, wherein the additional views window includes a history section (HS) and further comprising the steps of setting (44) after receiving a selection of an additional view, the presented main view as a previous main view and presenting (50) the previous main view in the history section of the second additional views window.

4. Method according to claim 3, further comprising the step of limiting the number of views presented in the history section according to time and/or number.

5. Method according to any previous claim, wherein the additional views window comprises an alternatives section (AS) and the step of presenting comprises presenting the chosen group of views in the alternatives section.

6. Method according to any previous claim, further comprising the step of updating (46) the additional view selection criterion based on system activities.

7. Method according to claim 6, wherein the system activities comprise selections of main process control views by at least one user.

8. Method according to claim 7, wherein the selections are selections from more than one user.

9. Method according to claim 7, wherein the selections are selections only from the first user.

10. Method according to claim 9, wherein the updating is valid only for a current session of the first user.

11. Method according to any of claims 6 - 10, wherein each view is provided with a number of probability values, each reflecting the probability of being selected as main process control view when a specific other process control view is a main process control view and the step of choosing according to the additional view selection criterion comprises choosing the additional views that have the highest probability values in relation to the current main view and the step of updating comprises updating the probability values based on the selection.

12. Method according to any of claims 6 - 11, wherein the system activities comprise alarms or events in the process control system.

13. Method according to claim 12, wherein one alarm or event is related to a process control device or a process control element in said process control device and only views with information concerning the alarm or event itself, said device and/or said process control element are included in said group of views.

14. User terminal (12) for simplifying for a first user to navigate among process control views (PCV1, PCV2, PCV3, PCV4, PCV5) in a process control system (10) and including a display (34), a user input unit (32) and a control unit (30), said control unit being configured to
- present a current main process control view in a first main view window (W1) together with a number of additional views in a second additional views window (W2),
- receive, from the first user, a selection of an additional view in the additional views window to be a main process control view,
- set the selected view as current main process control view,
- choose a group of views to be presented as additional views in the second additional views window based on an additional view selection criterion, and
- repeat presenting current main process control view in the first main view window according to the received selection with the chosen group of views as additional views in the second additional views window.

15. Computer program product (52) comprising computer program code (54) for simplifying for a first user to navigate among process control views (PCV1, PCV2, PCV3, PCV4, PCV5) on a user terminal display (34) of a process control system, said computer program code being configured to cause a computer to, when said computer program code is loaded into the computer:
present a current main process control view in a first main view window (W1) together with a number of additional views in a second additional views window (W2),
receive, from the first user, a selection of an additional view in the additional views window to be a main process control view,
set the selected view as current main process control view,
choose a group of views to be presented as additional views in the second additional views window based on an additional view selection criterion, and
repeat presenting current main process control view in the first main view window according to the received selection with the chosen group of views as additional views in the second additional views window.
